# EUROPEAN PATENT APPLICATION

(11) **EP 4 836 505 A1**
(43) Date of publication of application: **04.11.2026**
(21) Application number: 25382428.8
(22) Date of filing: 29.04.2025
(51) Int. Cl.: H04W 24/08, H04W 72/0453, H04W 84/18

(54) **A SOLUTION FOR TESTING DOWNLINK QUALITY IN A WIRELESS RADIO COMMUNICATION NETWORK**

(71) Applicant: Wirepas Oy, 33720 Tampere (FI)
(72) Inventor: MORTE PALACIOS, Jorge, 08029 Entença 146 3-3 Barcelona (ES); HIRVI, Hannu, 33820 Nirvankatu 38 Tampere (FI)
(74) Representative: Berggren Oy

(57) **Abstract**

The invention relates to a node system (200) for testing downlink quality in a wireless radio communication network (102). The system (200) comprises: a head node (202), and a member node (204). The member node (204) is configured to send a downlink quality test initiation message (402) comprising an indication of the specific downlink channel to the head node (202). After receiving the downlink quality test initiation message (402) the head node (202) is configured to send a downlink test packet (406) on the specific downlink channel to the member node (204). The member node (204) is further configured to: determine the downlink quality on the specific downlink channel, if at least a predefined number of downlink test packets (406) sent by the head node (202) is received by the member node (204). The member node is configured to consider that the downlink quality is sufficient, if the downlink quality determination indicates sufficient downlink quality, or consider that the downlink quality is insufficient, if the downlink quality determination indicates insufficient downlink quality. The invention relates also to a member node (204), a method, a computer program (526), and a tangible non-volatile computer-readable medium for testing downlink quality in a wireless radio communication network (102).

## Description

### TECHNICAL FIELD

The invention concerns in general the technical field of wireless radio communication networks. Especially the invention concerns testing downlink quality in a wireless radio communication network.

### BACKGROUND

Wireless radio communication network topologies can support high device densities and autonomous routing to provide the ability to quickly adapt to changes in the device environment and propagation conditions. The wireless radio communication networks may be based on different network topologies, e.g., a star topology, a mesh topology or a cluster tree topology. For example, in the cluster tree topology there is a parent-child relationship at every radio link of the network, where each device (i.e. node) has a connection to its next hop node. The node having a connection to the next hop node in the uplink direction, i.e. towards the root (sink) of the cluster tree, is a member node (i.e. a child node) of said next hop node (i.e. a parent node). The parent node may for example also be called as a head node or a router node. The term used for the parent node may also depend on the used protocol. For example, in Digital European Cordless Telecommunications (DECT-2020 NR) standard, the parent node is called as a radio device (RD) operating both in portable termination point (PT) and fixed termination point (FT) mode. Each parent node has one or more member devices.

When a member node associates with a head node, in the communication between the member node and the head node may be based on Time Division Duplex (TDD), Frequency Division Duplex (FDD), or both. In case the communication is based on FDD, the operating channel of the member nodes of the head node can be different than the cluster channel of the head node. Typically, a member node makes a decision to associate to a head node based on a cluster beacon received from the head node on the cluster channel of the head node, its advertised information like route cost, and link quality on this cluster channel of the head node. The channel used for the cluster beacon will serve as the uplink channel and in case the communication is based on TDD also as downlink channel between the head node and the member node.

However, when the communication is based on FDD, downlink quality (i.e. the quality of the downlink channel between the head node and the member node) is typically completely ignored in the decision process. This can lead to an uplink channel with a sufficient quality, but the different radio environment conditions on the frequency channels and device locations may lead into insufficient downlink channel quality, i.e. a non-working downlink channel. This effectively means that the downlink quality is completely random and depends on not having a large enough fading of the operating channel of the member node. Similarly, when a member node is changing its operating channel, the downlink quality on the new operating channel is not taken into account in the operating channel change process.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a node system, a wireless radio communication network, a member node, a method, a computer program, and a tangible non-volatile computer-readable medium for testing downlink quality in a wireless radio communication network. Another objective of the invention is that the node system, the wireless radio communication network, the member node, the method, the computer program, and the tangible non-volatile computer-readable medium for testing downlink quality in a wireless radio communication network enable ensuring quality of a downlink channel in the wireless radio communication network.

The objectives of the invention are reached by a node system, a wireless radio communication network, a member node, a method, a computer program, and a tangible non-volatile computer-readable medium as defined by the respective independent claims.

According to a first aspect, a node system for testing downlink quality in a wireless radio communication network is provided, wherein the system comprises: a head node, and a member node, wherein the member node is configured to initiate a downlink quality test on a specific downlink channel by sending a downlink quality test initiation message comprising an indication of the specific downlink channel to the head node; wherein after receiving the downlink quality test initiation message from the member node the head node is configured to send at least one downlink test packet on the specific downlink channel to the member node; and wherein the member node is further configured to: determine the downlink quality on the specific downlink channel, if at least a predefined number of downlink test packets sent by the head node is received by the member node, and consider that the downlink quality on the specific downlink channel is sufficient, if the downlink quality determination indicates sufficient downlink quality, or consider that the downlink quality on the specific downlink channel is insufficient, if the downlink quality determination indicates insufficient downlink quality.

The member node may be configured to send a downlink quality test result message comprising an indication of the downlink quality to the head node.

The specific downlink channel may be an operating channel of the member node.

Alternatively or in addition, the specific downlink channel may be different than a cluster channel of the head node.

The member node may be configured to initiate the downlink quality test on the specific downlink channel when associating with the head node.

Alternatively, the member node may be configured to initiate the downlink quality test on the specific downlink channel prior changing its operating channel.

The downlink quality test initiation message may be a control message.

Alternatively or in addition, the downlink quality test initiation message may be an association request, a separate message meant for initiating the downlink quality test, a part of the association request, or a message sent together with the association request.

The communication between the head node and the member node may be based on Frequency Division Duplexing (FDD).

The determination of the downlink quality may comprise at least one of: received signal strength indicator (RSSI) -based downlink quality determination, signal-to-noise ratio (SNR) -based downlink quality determination, bit error rate (BER) -based downlink quality determination, link quality indicator (LQI) -based downlink quality determination.

In response to receiving the downlink quality test initiation message from the member node, but before sending the at least one downlink test packet, the head node may be configured to send to the member node a response message indicating that the at least one downlink test packet is to be sent after the response message.

According to a second aspect, a wireless radio communication network is provided, wherein the wireless radio communication network comprises at least one node system as described above.

According to a third aspect, a member node for testing downlink quality in a wireless radio communication network is provided, wherein the member node comprises: a controller, and a radio communicator, wherein the member node is configured to: initiate a downlink quality test on a specific downlink channel by sending, by the radio communicator, a downlink quality test initiation message comprising an indication of the specific downlink channel to a head node, determine, by the controller, the downlink quality on the specific downlink channel, if at least a predefined number of downlink test packets sent by the head node is received by the member node, and conclude, by the controller, that the downlink quality on the specific downlink channel is sufficient, if the downlink quality determination indicates sufficient downlink quality, or conclude, by the controller, that the downlink quality on the specific downlink channel is insufficient, if the downlink quality determination indicates insufficient downlink quality.

According to a fourth aspect, a method for testing downlink quality in a wireless radio communication network is provided, wherein the method comprises: initiating, by a member node, a downlink quality test on a specific downlink channel by sending a downlink quality test initiation message comprising an indication of the specific downlink channel to a head node; determining, by the member node, the downlink quality on the specific downlink channel, if at least a predefined number of downlink test packets sent by the head node is received by the member node, and concluding, by the member node, that the downlink quality on the specific downlink channel is sufficient, if the downlink quality determination indicates sufficient downlink quality, or concluding, by the member node, that the downlink quality on the specific downlink channel is insufficient, if the downlink quality determination indicates insufficient downlink quality.

According to a fifth aspect, a computer program is provided, wherein the computer program comprises instructions which, when the program is executed by a computer, cause the computer to carry out the steps of the method as described above.

According to a sixth aspect, a tangible non-volatile computer-readable medium having stored thereon the computer program is provided.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an example of a wireless radio communication network.
Figures 2A-2C illustrate schematically examples of a node system, which operates in the wireless radio communication network.
Figure 3 illustrates schematically an example of a method for testing downlink quality in the wireless radio communication network.
Figure 4 illustrates schematically an example of a communication between a member node and a head node during a downlink quality test procedure.
Figure 5 illustrates schematically an example of operational parts of a node device.

### DESCRIPTION OF THE EXEMPLIFYING EMBODIMENTS

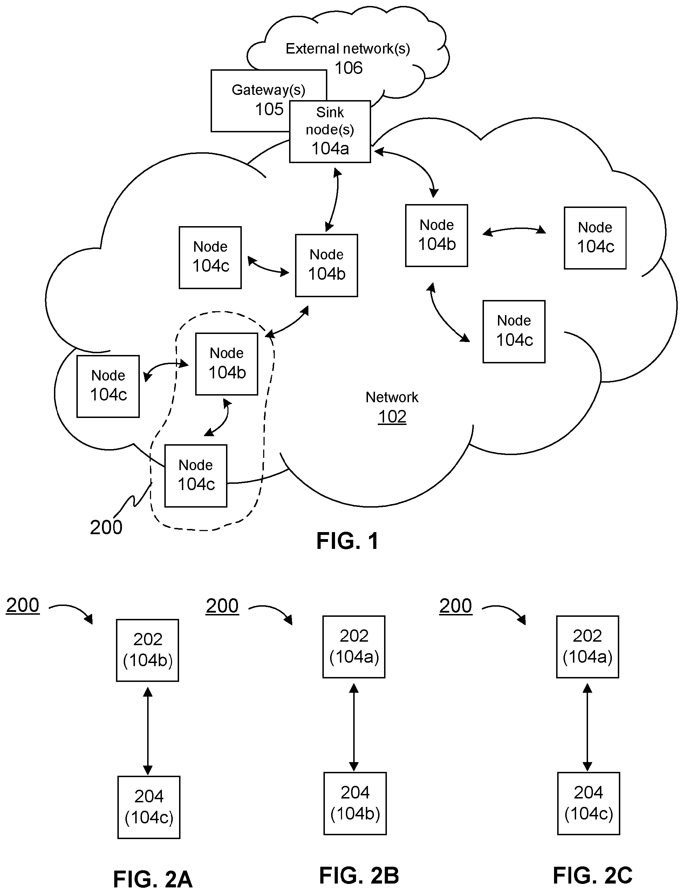

Figure 1 illustrates schematically an example of a wireless communication environment in which a node system 200 is configured to operate. The environment comprises a wireless radio communication network (system) 102, which comprises a plurality of wireless radio communication nodes (devices) 104a, 104b, 104c.

The network 102 may be any network that uses communication (transmission) packets in the communication, e.g., in beacon signalling or in data exchanging between the nodes 104. The network 102 may be any network that uses a multi-hop communication, i.e., communication packets may be delivered over at least two consecutive radio links, e.g., two, three, four, five, or more radio links, between the nodes 104. The network 102 may be a network that complies Digital European Cordless Telecommunications (DECT-2020 NR) standard, which is a radio access technology developed by European Telecommunications Standards Institute (ETSI). Some non-limiting examples, to which the node system 200 may also be applied may comprise, but is not limited to, a wireless multi-hop network, a wireless mesh network (e.g., a wireless sensor network (WSN), e.g., the WSN explained in patent publication US 8,064,363), a Bluetooth Low Energy (BLE) mesh network, a Zigbee network, a Thread network, a Public Land Mobile Network (PLMN), a Wireless Local Area Network (WLAN), a Low Power Wide Area Network (LPWAN), a cellular based local area network, a cellular network, and/or any other wireless network.

Each node 104a, 104b, 104c of the network 102 (i.e. each on-network node) operates on a same spectrum comprising one or more frequency bands at a same geographical area, e.g. within the presented environment. Each of the one or more frequency bands may comprise one or more frequency channels. The use of same spectrum enables a unidirectional (one-way) as well as a bidirectional radio communication between the nodes 104a, 104b, 104c in the network 102, whereupon radio transmissions transmitted by one node 104a, 104b, 104c may be received by another nodes 104a, 104b, 104c and vice versa.

As previously has been explained, each node 104a, 104b, 104c is able to provide, by means of its radio communicator 530, a radio communication, e.g. a unidirectional or a bi-directional radio communication, with at least one other node 104a, 104b, 104c. This means that each node 104a, 104b, 104c may operate as a transmitter, as a receiver, or as a transmitter-receiver when it communicates (transmits) at least one radio transmission (e.g. data packet or message), e.g. one, two, three, four, or more radio transmissions, to other node(s) 104a, 104b, 104c and receives at least one radio transmission from the other node(s) 104a, 104b, 104c in the network 102.

The network 102 may also comprise at least one gateway (device) 105, e.g. one, two, three, four, or more gateways. Each gateway 105 operates as a gateway between the network 102 and other external network(s) 106, e.g. Internet, and delivers data into the network 102 and from the network 102. Each gateway 105 may also communicate with at least one external (e.g. off-network) radio communication device, e.g., one, two, three, four, or more external devices, in the external network(s) 106, e.g., Internet.

Each gateway 105 comprises at least one sink node (device) 104a, e.g. one, two, three, four, or more sink devices. Each sink node 104a communicates with the gateway 105 and operates as a radio interface for the gateway 105 in the network 102. Each sink node 104a belongs to the plurality of devices 104a, 104b, 104c of the network 102. Each sink node 104a may locate physically in connection with the gateway 105 or separately in a different part of the network 102. If the gateway 105 comprises several sink nodes 104a, one may locate in connection with the gateway 105 and others separately in different parts of the network 102.

The sink node(s) 104a typically have a specific role to route data from the network 102 to the gateway 105 and/or from the gateway 105 into the network 102. The sink node role does not need to be fixed, but the sink node 104a may change its role into a router role, e.g. if the connection to the gateway 105 is lost or if the gateway 105 is not able to provide the service, e.g. the gateway 105 has lost its connection to the Internet. The other nodes 104b, 104c are able to operate in different fixed or non-fixed roles in the network 102. The other nodes 104b, 104c in the network 102 are router nodes (i.e. routers or router devices) 104b, i.e. nodes configured to operate in a router role, and non-router nodes (i.e. non-routers or non-router devices) 104c, i.e. nodes configured to operate in a non-router role, depending on whether a device needs to participate in the data forwarding. One method for selecting router and non-router roles may be e.g. in accordance with the method explained in a patent publication US 10,499,264. The sink nodes 104a and the router nodes 104b of the network 102 may participate in routing operations, i.e. in the routing of the data.

Each router node 104b maintains a connectivity of the network 102 and routes (forwards) data (e.g. data packets or messages) of other node(s) 104a, 104b, 104c when necessary. In other words, each router node 104b participates in the routing of data in the network 102. Each non-router node 104c is able to provide a bi-directional communication in order to transmit its own data and to receive data directed for it similarly as sink nodes 104a and router nodes 104b, but the non-router node 104c does not route data of other nodes 104a, 104b, 104c. Each of nodes of the network 102 may be able to operate at least as a router node 104b or a non-router node 104c. Alternatively, at least part of the nodes of the network 102 may be able to operate as a router node 104b or non-router node 104c, and one or more of the nodes of the network 102 may be able to operate only as a router node 104b or only as a non-router node 104c.

The network 102 comprises the nodes 104b, 104c so that all nodes 104b, 104c are not able or not preferring to communicate directly with the sink node(s) 104a due to radio conditions, e.g. extensive distance between the nodes 104a, 104b, 104c, interference or signal fading between the nodes 104a, 104b, 104c; and/or a limited radio range, whereupon it is necessary or preferred by the nodes 104a, 104b, 104c to use multi-link (i.e. multi-hop) communication between each node 104b, 104c and the sink node 104a.

Uplink (UL) data generated by one or more of the plurality of nodes 104b, 104c is routed in an uplink direction in the network 102, i.e. outwards from network 102, e.g. to the one or more external networks 106. Downlink (DL) data generated for one or more of the plurality of nodes 104a, 104b, 104c is routed in a downlink direction in the network 102, i.e. into the network 102, e.g. from the one or more external networks 106.

The network 102 may be based on different network topologies, e.g. a cluster tree topology, a star topology, a mesh topology. In the example of Figure 1, the network 102 is based on a cluster tree topology. However, the invention is not limited to that and the network 102 may also be based on other network topologies.

In the example of Figure 1, one example node system 200 operating in the network 102 is illustrated with the dashed line. Although only one example node system 200 is highlighted in the example of Figure 1, one or more other node systems 200 may operate in the network 102.

The node system 200 comprises a head node (device) 202 and a member node (device) 204. In other words, the node system 200 is formed by a node pair comprising the head node 202 and the member node 204. The head node 202 is the next hop node of the member node 204 in the uplink direction. The member node 204 is in turn the next hop node of the head node 202 in the downlink direction. The head node 202 and the member node 204 belong to the network 102, i.e. to the plurality of wireless radio communication nodes 104a, 104b, 104c of the network 102.

Figures 2A-2C illustrate schematically examples of the node system 200, which operates in the network 102. The node system 200 is for testing downlink quality in the network 102. More specifically, the node system 200 is for testing the downlink quality between the head node 202 and the member node 204 (i.e. the quality of the downlink channel between the head node 202 and the member node 204). The head node 202 may further have one or more other member nodes 204, in which case the head node 202 may form a node system 200 with each of its member nodes 204. Similarly, a member node 204 may act as a head node 202 of another node system 200. Thus, the network 102 may comprise one or more node systems 200, wherein each node system 200 comprises a head node 202 and a member node 204.

The head node 202 of the node system 200 may be a sink node 104a or a router node 104b. The member node 204 of the node system 200 may be a router node 104b or a non-router node 104c. In the example of Figure 2A, the head node 202 is a router node 104b and the member node 204 is a non-router node 104c. In the example of Figure 2B, the head node 202 is a sink node 104a and the member node 204 is a router node 104b. In the example of Figure 2C, the head node 202 is a sink node 104a and the member node 204 is a non-router node 104c. Although not shown in Figures 2A-2C, the node system 200 may comprise a head node 202 being a router node 104b and a member node 204 being a router node 104b.

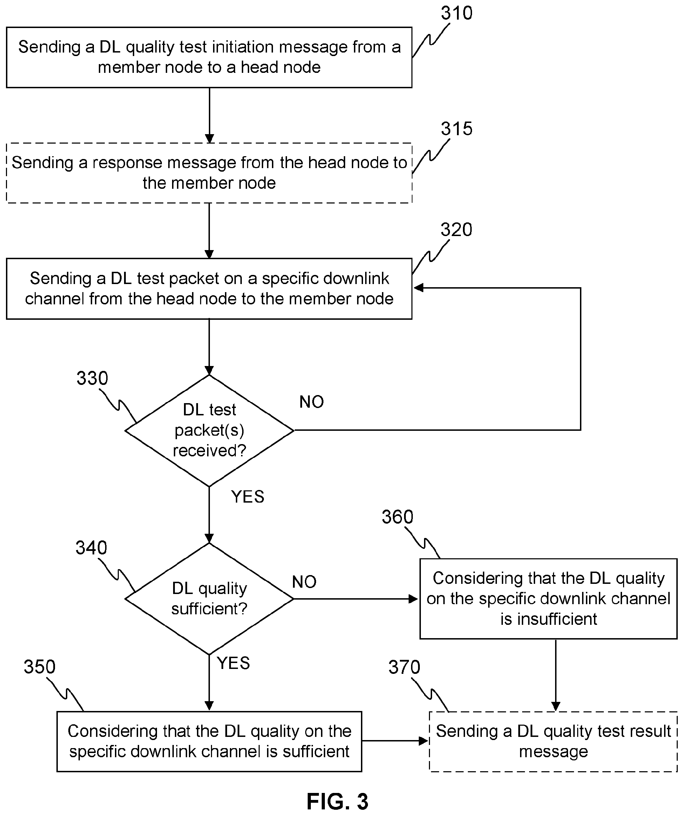

Figure 3 illustrates schematically an example of a method for testing downlink quality in the wireless radio communication network 102 by the previously discussed node system 200. Figure 3 illustrates the method as a flowchart.

At step 310, the member node 204 initiates a downlink quality test (procedure) on a specific downlink channel by sending a downlink quality test initiation message 402 to the head node 202. The downlink quality test initiation message 402 comprises an indication of the specific downlink channel. For example, the downlink quality test initiation message 402 may comprise a channel parameter indicating the specific downlink channel. The downlink quality test initiation message 402 may further comprise an indication of a time window for receiving a downlink test packet 406 from the head node 202, e.g. a time window during which the member node 204 wishes to receive the downlink test packet 406 from the head node 202. For example, the downlink quality test initiation message 402 may comprise a time window parameter indicating the time window for receiving the downlink test packet 406 from the head node 202. This enables that the member node 204 may indicate the time window during which it at least wishes to receive the downlink test packet 406 from the head node 202. The downlink quality test initiation message 402 may for example be sent on a cluster channel of the head node 202 (i.e. a cluster channel of a cluster formed by the head node 202).

The specific downlink channel may for example be an operating channel of the member node 204. The specific downlink channel may for example be different than the cluster channel of the head node 202. For example, when the communication between the head node 202 and the member 204 Frequency Division Duplexing (FDD), the operating channel of the member node 204 may be different than the cluster channel of the head node 202. Due to frequency selective channels in the FFD, the method for testing the downlink quality described in this disclosure is especially beneficial, when the communication is based on the FFD. Thus, the communication between the head node 202 and the member node 204 may preferably be based on FDD. However, the method for testing the downlink quality described in this disclosure may also be applied, when the communication is based on Time Division Duplex (TDD).

According to an example, the member node 204 may initiate the downlink quality test on the specific downlink channel when associating with the head node 202. In other words, the downlink quality test may be performed as a part or continuation of the association process between the member node 204 and the head node 202. In connection with the association process, the specific downlink channel may be the downlink channel intended to be used for the downlink connection, e.g. the operating channel of the member node 204. Performing the downlink quality test when associating with the head node 202 enables verifying the downlink quality on the downlink channel intended to be used for the downlink connection, when establishing the association between the member node 204 and the head node 202.

According to another example, the member node 204 may initiate the downlink quality test on the specific downlink channel prior changing its operating channel. In other words, the member node 204 may initiate the downlink quality test, when the member node 204 being already associated with the head node 202 is going to change its operating channel. In connection with the operating channel change, the specific downlink channel, may be a new operating channel to which the member node 204 is intending to change. Performing the downlink quality test prior changing its operating channel enables verifying the downlink quality on the new operating channel to which the member node 204 is intending to change. This ensures that the downlink connection with the head node 202 will continue working also on the new operating channel.

The downlink quality test initiation message 402 may be a control message. For example, the downlink quality test initiation message 402 may be an association request (message), a separate message meant for initiating the downlink quality test, a part (e.g. a field) of the association request, or a message sent together with the association request . The downlink quality test initiation message 402 may for example be a field (e.g. an Information Element (IE) field or a bit field) of the association request message or anything in the message (e.g. any other part of the message) that indicates the wish by the member node 204 to initiate the downlink quality test. Alternatively, the downlink quality test initiation message 402 may for example be a Random Access Resource (RACH) IE field sent together with the association request. The RACH IE field may for example be a RACH IE field according to DECT-2020 NR. The RACH IE field according to DECT-2020 NR itself already comprises information about the operating channel of the member node 204.

In the association process between the member node 204 and the head node 202, the member node 204 is required to send an association request to the head node 202. Thus, using of the association request as the downlink quality test initiation message 402 allows to use the same message for requesting the association and initiating the downlink quality test. In other words, the association and the initiation of the downlink quality test may be requested with the same message send to the head node 202.

Prior changing its operating channel, the member node 204 may for example inform the head node 202 about the new operating channel by using the association request. Thus, using of the association request as the downlink quality test initiation message 402 allows to use the same message for informing the head node 202 about the new operating channel of the member node 204 and initiating the downlink quality test.

After receiving the downlink quality test initiation message 402 from the member node 204, the head node 202 sends the downlink test packet 406 on the specific downlink channel to the member node 204 at step 320. The head node 202 may send the downlink test packet 406 to the member node 204 directly in response to receiving the downlink quality test initiation message 402 from the member node 204. Alternatively, before sending the downlink test packet 406 to the member node 204, the head node 202 may send 315 to the member node 204 a response message 404 in response to receiving the downlink quality test initiation message from the member node 204. The response message 404 may for example be send on the same channel as the downlink quality test initiation message 402 was sent to by the member node 204 the head node 202. Although, the downlink test packet 406 may be sent to the member node 204 without sending the response message 404 first, typically the response message 404 is sent to member node 204 before sending the downlink test packet 406 to the member node 204. For example, in some protocols (e.g. in the DECT-2020 NR) the response message 404 may be required.

The response message 404 may comprise an indication that the downlink test packet 406 is to be sent to the member node 204 after the response message 404. The response message 404 may further comprise an indication that the downlink test packet 406 must be acknowledged to verify the downlink quality. Alternatively or in addition, the response message 404 may further comprise an indication of the intended time window for the downlink test packet 406. The intended time window may correspond to the time window indicated in the downlink quality test initiation message 402 by the member node 204. In that case, the indication of the intended time window comprised in the response message 404 may be used to verify the time window for receiving the downlink test packet 406. Alternatively, the intended time window may be different than the time window indicated in the downlink quality test initiation message 402 by the member node 204. In that case, the indication of the intended time window comprised in the response message 404 may be used to inform the member node 204 about the time window for receiving the downlink test packet 406. The response message 404 may comprise the indication of the intended time window for the downlink test packet 406 even if the downlink quality test initiation message 402 does not comprise any indication of the time window for receiving the downlink test packet 406. The response message 404 may be a control message. For example, the response message may be an association response (message), a separate message, or a part of the association response or any another message (e.g. a field of the message). For example, if the downlink quality test initiation message 402 sent by the member node 204 is an association request, the response message 404 may be an association response. The response message 404 being an association response may comprise the indication that the downlink test packet 406 is to be sent to the member node 204 after the response message 404 and further the indication that the downlink test packet 406 must be acknowledged to verify the downlink quality and/or the indication of the intended time window for receiving the downlink test packet 406 discussed above.

Although it is described above that the head node 202 sends one downlink test packet 406 on the specific downlink channel to the member node 204, the head node 202 may also send multiple downlink test packets (e.g. two or more downlink test packets) 406 on the specific downlink channel to the member node 204 at the step 320. In other words, the head node 202 sends at least one downlink test packet 406 on the specific downlink channel to the member node 204 at the step 320. Sending multiple downlink test packets 406 on the specific downlink channel enables providing more reliable information about the downlink quality on the specific downlink channel. Sending multiple downlink test packets 406 on the specific downlink channel also enables to get better statistics of the downlink quality on said specific downlink channel. The member node 204 may for example request multiple downlink test packets 406 from the head node 202. For example, the downlink quality test initiation message 402 may further comprise an indication of the request for multiple downlink test packets 406. Alternatively or in addition, the response message 404 send by the head node 202 may further comprise an indication that multiple downlink test packets 406 is to be sent to the member node 204 after the response message 404. The response message 404 may also comprise an indication of the number of downlink test packets 406 to be send to the member node 204. This enables that the member node 204 is aware of the number of downlink test packets 406 expected to be received from the head node 202.

At step 330, the member node 204 determines whether the downlink test packet 406 is received from the head node 202. If the downlink test packet 406 is received from the head node 202, the member node 204 performs a downlink quality determination to be able to conclude whether the downlink quality on the specific downlink channel is sufficient as will be described. If the downlink test packet 406 is not received by the member node 204 from the head node 202, the sending of the downlink test packet 406 by the head node 202 may be retried again a predetermined number of times. If the member node 204 does not receive the downlink test packet 406 after the predetermined number of retries, the member node 204 may consider that the downlink quality on the specific downlink channel is insufficient. Alternatively, if the downlink test packet 406 is not received by the member node 204 from the head node 202, the member node 204 may retry sending the downlink quality test initiation message 402 to retry the initiation of the downlink quality test procedure a predetermined number of times. If the member node 204 does not receive the downlink test packet 406 after the predetermined number of retries, the member node 204 may consider that the downlink quality on the specific downlink channel is insufficient. Reinitiation of the downlink quality test procedure by sending the downlink quality test initiation messages 402 again may be heavier process than sending only the downlink test packets 406 again. Thus, if the downlink test packet 406 is not received by the member node 204 from the head node 202, it is preferable to retry sending the downlink test packet 406 by the head node 202 again the predetermined number of times.

In case the head node 202 sends multiple downlink test packets 406, the member node 204 may determine at the step 330 whether the multiple test packets 406 are received from the head node 202. If the member node 204 does not receive any of the multiple downlink test packets 406, the member node 204 may consider that the downlink quality on the specific downlink channel is insufficient. For example, the specific downlink channel on which the downlink test packets 406 were sent may have interference on the head node location (but totally fine in member node location), which may cause that the member node 204 does not receive the downlink test packets 406. Alternatively, if the member node 204 receives only some of the multiple downlink test packets 406 from the head node 202, the member node 204 may consider that the downlink quality on the specific downlink channel is insufficient or alternatively the member node 204 may perform the downlink quality determination based on the received downlink test packets 406. A downlink test packet 406 may be considered not received, for example, if the packet is totally missed, or if the packet is received, but an error detection, e.g. Cyclic redundancy check (CRC), indicates an error. In case the packet is received, but the error detection indicates the error, the member node 204 does not know, if the received packet was the downlink test packet or some other packet, so the member node 204 has to consider the packet as not received. The member node 204 may for example perform a packet error rate (PER) analysis when determining whether the multiple test packets 406 are received from the head node 202.

If the member node 204 receives at least a predefined number of downlink test packets 406 sent by the head node 202, the member node 204 performs the downlink quality determination as will be described. In case the head node 202 sends only one downlink test packet 406, the predefined number of the downlink test packets 406 needed to be received by the member node 204 to perform the downlink quality determination is one. While in case the head node 202 sends multiple downlink test packets 406, the predefined number of the downlink test packets 406 needed to be received by the member node 204 to perform the downlink quality determination may for example be all, three quarters, two-thirds, or half, etc. of the sent downlink test packets 406. In case the head node 202 sends multiple downlink test packets 406, the predefined number of the downlink test packets 406 needed to be received by the member node 204 to perform the downlink quality determination may for example depend on the situation, e.g. on the number of downlink test packets 406 sent, etc.

At step 340, if at least the predefined number of the downlink test packets 406 sent by the head node 202 is received by the member node 204, the member node 204 determines the downlink quality on the specific downlink channel. The determination of the downlink quality may for example comprise at least one of: received signal strength indicator (RSSI) -based downlink quality determination, signal-to-noise ratio (SNR) -based downlink quality determination, bit error rate (BER) -based downlink quality determination, link quality indicator (LQI) -based downlink quality determination. For example, when the RSSI -based downlink quality determination is used, the member node 204 may measure an RSSI value of the received downlink test packet 406. The measured RSSI value represents the downlink quality on the specific downlink channel. In case the member node 204 receives multiple downlink test packets 406 from the head node 202, the member node 204 may determine the downlink quality on the specific downlink channel based on the received multiple downlink test packets 406. For example, the member node 204 may first determine separately downlink quality on the specific downlink channel based on each received downlink test packet 406 and then determine the (final) downlink quality on the specific downlink channel based on the multiple separately determined downlink qualities. In case the member node 204 receives multiple downlink test packets 406, the determination of the downlink quality may comprise applying one or more statistical analyses. For example, applying one or more statistical analyses may at its simplest comprise averaging.

If the downlink quality determination indicates sufficient downlink quality, the member node 204 considers 350 that the downlink quality is sufficient on the specific downlink channel. On the other hand, if the downlink quality determination indicates insufficient downlink quality, the member node 204 considers 360 that the downlink quality on the specific downlink channel is insufficient.

The member node 204 may for example have one or more predefined link quality criteria (e.g. predefined link quality levels) used for defining whether the downlink quality is sufficient or insufficient. For example, if the determined downlink quality on the specific downlink channel meets (e.g. reaches or exceeds) a predefined link quality criterion, the member node 204 may consider that the downlink quality on the specific downlink channel is sufficient. On the other hand, if the determined downlink quality on the specific downlink channel does not meet the predefined link quality criterion, the member node 204 may consider that the downlink quality on the specific downlink channel is insufficient. As mentioned, also more than one predefined link quality criterion may be used. For example, if the downlink quality test procedure is repeated on one or more different downlink channels, more than one predefined link quality criterion may be used. The repeating of the downlink quality test procedure on one or more different downlink channels will be described more later in this disclosure. The member node 204 may for example have a first predefined link quality criterion and a second predefined link quality criterion. The first predefined link quality criterion may for example correspond to a link quality level that is good for the intended communication and the member node 204 does not need to test other downlink channels to search a downlink channel with a better quality. The second predefined link quality criterion may for example correspond to a link quality level that is below the link quality level of the first predefined link quality criterion, but allows the communication. A downlink channel, whose downlink quality meets the second predefined link quality criterion (but not the first predefined link quality criterion), may be used, if no downlink channel, whose downlink quality meets the first predefined link quality criterion, is available. If the downlink quality does not meet the second predefined link quality criterion, the member node 204 may consider that the downlink quality on said downlink channel is insufficient.

The one or more predefined link quality criteria may be adjusted depending on the radio environment, e.g. depending on how challenging the radio environment is. For example, if all downlink channels have relatively poor quality and/or if there are not many transmissions, the one or more predefined link quality criteria may be lowered. On the other hand, if there are a lot of transmissions, the one or more predefined link quality criteria may be increased, as better quality of the downlink channel is needed.

The member node 204 may further send 370 a downlink quality test result message 408 to the head node 202. The downlink quality test result message 408 may comprise an indication of the downlink quality. The downlink quality test result message 408 may for example be an acknowledgement message send to the head node 202 to verify the downlink quality on the specific downlink channel (either sufficient or insufficient depending on the result of the downlink quality determination). The downlink quality test result message 408 may alternatively or in addition be for example an association release message to terminate the association between the member node 204 and the head node 202, if the downlink quality is insufficient. For example, the member node 204 may decide to terminate the association and send the association release message to the head node 202 to inform the head node 202 about the termination of the association, if the downlink quality is insufficient. When the downlink quality test is performed in connection with the operating channel change of the member node 204 and the member node 204 considers that the downlink quality is insufficient, the member node 204 may for example choose another downlink channel and initiate the downlink quality test on this another downlink channel. Before initiating the downlink quality test on another downlink channel, the member node 204 may for example send an acknowledgement message to the head node 202 to indicate the downlink quality on the already tested specific downlink channel. Alternatively, when the downlink quality test is performed in connection with the operating channel change of the member node 204 and the member node 204 consider that the downlink quality is insufficient, the member node 204 may choose another head node with which to associate, send the association release message to the current head node 202 to inform said head node 202 about the termination of the association, and start the association process including the downlink quality test discussed previously with this another head node.

According to an example, the downlink quality test procedure described above may be repeated on one or more different downlink channels to test the downlink quality on different downlink channels. In other words, after performing the downlink quality test on a first specific downlink channel, the member node 204 may initiate the downlink quality test on a second specific downlink channel, and after performing the downlink quality test on the second specific downlink channel, the member node 204 may initiate the downlink quality test on a third specific downlink channel, and so on. The member node 204 may then make the selection of the downlink channel to be used in the downlink connection with the head node 202 based on the results of the downlink quality tests on the different downlink channels. When the downlink quality test procedure is repeated on one or more different downlink channels, the member node 204 may send the downlink quality test result message 408 to the head node 202 after performing the downlink quality test procedure on each downlink channel of the one or more different downlink channels and/or after performing the downlink quality test on all downlink channels of the one or more different downlink channels.

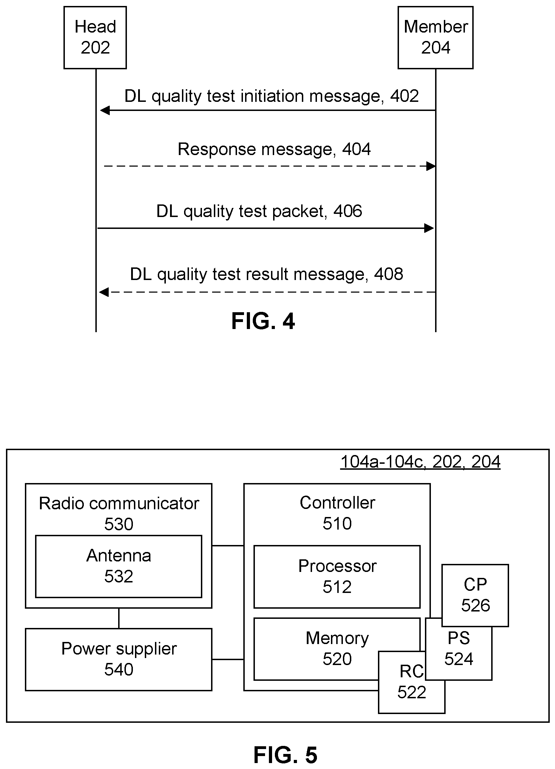

Figure 4 illustrates schematically an example of the communication between the member node 204 and the head node 202 during the downlink quality test procedure. The example communication of Figure 4 follows the method steps described above. In the example communication of Figure 4, the member node 204 initiates the downlink quality test procedure on the specific downlink channel by sending the downlink quality test initiation message 402 to the head node 202. The head node 202 sends the downlink test packet 406 on the specific downlink channel to the member node 204 after receiving the downlink quality test initiation message 402 from the member node 204. The head node 202 may send the downlink test packet 406 to the member node 204 directly in response to receiving the downlink quality test initiation message 402 from the member node 204. Alternatively, before sending the downlink test packet 406 to the member node 204, the head node 202 may send to the member node 204 the response message 404 in response to receiving the downlink quality test initiation message 402 from the member node 204. Finally, in the example communication of Figure 4, the member node 204 may further send the downlink quality test result message 408 to the head node 202, wherein the downlink quality test result message 408 may comprise an indication of the downlink quality.

Figure 5 illustrates schematically a communication node 104a-104c, 202, 204 that is able to communicate in the network 102 and to perform the relevant features (steps) of the method as above has been explained. In other words, the node that is able to operate as the member node 204 and to perform the features of the method relevant to the member node 204 as above has been explained, and/or as the head node 202 and to perform the features of the method relevant to the head node 202 as above has been explained.

The node 104a-104c, 202, 204 comprises a controller (i.e. a control part) 510 that is configured to control operations of its operational parts 512, 520, 530, 532, 540 so that the node 104a-104c, 202, 204 operates as above has been explained.

The controller 510 comprises a processor (i.e. a processor part) 512 that is configured to carry out operator-initiated and/or computer program-initiated instructions as well as to processes data in order to run applications. The processor 512 may comprise at least one processor, e.g. one, two, three, four, or more processors.

The controller 510 also comprises the memory (i.e. a memory part) 520 that is configured to store and to maintain data. The data may be instructions, computer programs, and data files. The memory 520 comprises at least one memory, e.g. one, two, three, four, or more memories.

The node 104a-104c, 202, 204 also comprises the radio communicator (i.e. a radio communication part or a data transferer) 530 that the controller 510 is configured to use in order to send commands, requests, messages, and/or data to at least one of nodes in the system 200 and/or in the network 102 via an antenna 532. The controller 510 is also configured to use the radio communicator 530 in order to receive commands, requests, and/or data from at least one of nodes in the system 200 and/or in the network 102 via the antenna 532. The communication between the radio communicator 530 of the node 104a-104c, 202, 204 and other devices in the system 200 and/or in the network 102 is provided through the antenna 532 wirelessly.

The node 104a-104c, 202, 204 may further comprise a power supplier (power supply part) 540. The power supplier 540 comprises components that are configured to power the node 104a-104c, 202, 204, e.g. a battery with a regulator or a connection component configured to connect an external power supply to the node 104a-104c, 202, 204.

The memory 520 is configured to store at least a radio communication (RC) application 522 to operate (control) the radio communicator 530, and a power supply (PS) application 524 to operate the power supplier 540.

The memory 520 is also configured to store a computer program (CP), (i.e. a computer software, a computer application) 526, which is configured to use at least one of parts 530, 532, 540 in order to carry out at least the operations of the node 104a-104c, 202, 204 explained above, when it is executed (run) in a computer, e.g. in the node 104a-104c, 202, 204, by means of the controller 510.

The computer program 526 may be stored in a tangible, non-volatile computer-readable storage medium.

The node system 200 and the method as described above enable ensuring the quality of the downlink channel in the wireless radio communication network 102. In other words, the node system 200 and the method as described above enable ensuring that the quality of the downlink channel of the connection between a head node 202 and a member node 204 in the wireless radio communication network 102 is sufficient. This in turn enables improving the reliability of the downlink channel. The node system 200 and the method as described above enable performing the ensuring of the quality of the downlink channel quickly, because the head node 202 does not need to guess when and on what channel the quality testing would be useful, as the member node 204, which knows the downlink channel(s) that should be tested, initiates the downlink quality test procedure. The node system 200 and the method as described above enable taking into account the downlink quality, e.g. in the association process or in the operating channel change process of the member node 204. This is especially beneficial, when the communication is based on FDD. The method as described above is especially beneficial, when the member node 204 that already has own member nodes is seeking for a new association, as the change of the cluster channel of the member node 204 would take time and might cause issues for its member nodes, perhaps dropping out some of them. Also, the new head node candidate does not know that the member node 204 is in the need for a new head node before the initiation comes from the member node 204.

The specific examples provided in the description given above should not be construed as limiting the applicability and/or the interpretation of the appended claims. Lists and groups of examples provided in the description given above are not exhaustive unless otherwise explicitly stated.

## Claims

1. A node system (200) for testing downlink quality in a wireless radio communication network (102), the system (200) comprises:
a head node (202), and
a member node (204),
wherein the member node (204) is configured to initiate a downlink quality test on a specific downlink channel by sending a downlink quality test initiation message (402) comprising an indication of the specific downlink channel to the head node (202);
wherein after receiving the downlink quality test initiation message (402) from the member node (204) the head node (202) is configured to send at least one downlink test packet (406) on the specific downlink channel to the member node (204); and
wherein the member node (204) is further configured to:
determine the downlink quality on the specific downlink channel, if at least a predefined number of downlink test packets (406) sent by the head node (202) is received by the member node (204), and
consider that the downlink quality on the specific downlink channel is sufficient, if the downlink quality determination indicates sufficient downlink quality, or
consider that the downlink quality on the specific downlink channel is insufficient, if the downlink quality determination indicates insufficient downlink quality.

2. The system (200) according to claim 2, wherein the member node (204) is configured to send a downlink quality test result message (408) comprising an indication of the downlink quality to the head node (202).

3. The system (200) according to any of the preceding claims, wherein the specific downlink channel is an operating channel of the member node (204).

4. The system (200) according to any of the preceding claims, wherein the specific downlink channel is different than a cluster channel of the head node (202).

5. The system (200) according to any of the preceding claims, wherein the member node (204) is configured to initiate the downlink quality test on the specific downlink channel when associating with the head node (202).

6. The system (200) according to any of claims 1 to 4, wherein the member node (204) is configured to initiate the downlink quality test on the specific downlink channel prior changing its operating channel.

7. The system (200) according to any of the preceding claims, wherein the downlink quality test initiation message is a control message.

8. The system (200) according to any of the preceding claims, wherein the downlink quality test initiation message (402) is an association request, a separate message meant for initiating the downlink quality test, a part of the association request, or a message sent together with the association request.

9. The system (200) according to any of the preceding claims, wherein the communication between the head node (202) and the member node (204) is based on Frequency Division Duplexing (FDD).

10. The system (200) according to any of the preceding claims, wherein the determination of the downlink quality comprises at least one of: received signal strength indicator (RSSI) -based downlink quality determination, signal-to-noise ratio (SNR) -based downlink quality determination, bit error rate (BER) -based downlink quality determination, link quality indicator (LQI) -based downlink quality determination.

11. The system (200) according to any of the preceding claims, wherein in response to receiving the downlink quality test initiation message (402) from the member node (204), but before sending the at least one downlink test packet (406), the head node (202) is configured to send to the member node (204) a response message (404) indicating that the at least one downlink test packet (406) is to be sent after the response message (404).

12. A wireless radio communication network (102) comprising at least one node system (200) according to any of the preceding claims.

13. A member node (204) for testing downlink quality in a wireless radio communication network (102), comprising:
a controller (510), and
a radio communicator (530),
wherein the member node (204) is configured to:
initiate a downlink quality test on a specific downlink channel by sending, by the radio communicator (530), a downlink quality test initiation message (402) comprising an indication of the specific downlink channel to a head node (202), and
determine, by the controller (510), the downlink quality on the specific downlink channel, if at least a predefined number of downlink test packets (406) sent by the head node (202) is received by the member node (204), and
consider, by the controller (510), that the downlink quality on the specific downlink channel is sufficient, if the downlink quality determination indicates sufficient downlink quality, or
consider, by the controller (510), that the downlink quality on the specific downlink channel is insufficient, if the downlink quality determination indicates insufficient downlink quality.

14. A method for testing downlink quality in a wireless radio communication network (102), the method comprises:
initiating, by a member node (204), a downlink quality test on a specific downlink channel by sending (310) a downlink quality test initiation message (402) comprising an indication of the specific downlink channel to a head node (202), and
determining (340), by the member node (204), the downlink quality on the specific downlink channel, if at least a predefined number of downlink test packets (406) sent by the head node (202) is received by the member node (204), and
considering (350), by the member node (204), that the downlink quality on the specific downlink channel is sufficient, if the downlink quality determination indicates sufficient downlink quality, or
considering (360), by the member node (204), that the downlink quality on the specific downlink channel is insufficient, if the downlink quality determination indicates insufficient downlink quality.

15. A computer program (526) comprising instructions which, when the program is executed by a computer, cause the computer to carry out the steps of the method of claim 14.

16. A tangible non-volatile computer-readable medium having stored thereon the computer program (526) of claim 15.
